**Europäisches Patentamt**

**European Patent Office**

**Office européen des brevets**

(19)

(11) Publication number: **0 045 635**
A2

(12) # EUROPEAN PATENT APPLICATION

(21) Application number: **81303509.4**

(22) Date of filing: **31.07.81**

(51) Int. Cl.³: **B 60 R 1/06**

(30) Priority: **01.08.80 US 174535**

(43) Date of publication of application:
**10.02.82 Bulletin 82/6**

(84) Designated Contracting States:
**AT BE CH DE FR GB IT LI LU NL SE**

(71) Applicant: **KEELER BRASS COMPANY**
**955 Godfrey Avenue, S.W.**
**Grand Rapids, Michigan 49503(US)**

(72) Inventor: **Stelma, Gerard Nicholas**
**557 Carnoustic Dr. S.E.**
**Grand Rapids Michigan 49506(US)**

(74) Representative: **Lewis, David Overington**
**c/o Babcock International Ltd. Cleveland House 19 St.**
**James's Square**
**London SW1Y 4LN(GB)**

(54) **Electrical remote actuated positioning device.**

(57) An actuator assembly, particularly for a motor vehicle rear view mirror, includes a gimballed pivot member having slidably mounted thereon a sphere. The sphere is located between channels formed in first and second slides movable in mutually perpendicular directions to a plane perpendicular to the pivot member to rotate the pivot member in the gimbal. Drive to the slides from electric motors is partially dis-engageable against a resilient bias to permit manual movement of the pivot member and to avoid stalling the motors when limits of travel are encountered. The assembly is provided with an impervious housing and the sphere and slides are of lubricious plastics material.

FIG.1

Croydon Printing Company Ltd.

: 1 :

## DESCRIPTION

### "ELECTRICAL REMOTE ACTUATED POSITIONING DEVICE".

This invention relates to actuator assemblies for effecting rotational movement through a restricted spherical arc of a pivot member supported in a mounting, and, more particularly, to actuators for effecting movement of vehicle mounted, rear view, mirrors.

Where items are installed, mounted on a pivot member supported in a mounting permitting rotational movement through a restricted spherical arc, it can be desirable to provide a mechanical drive to effect such rotational movement, especially where the item is inaccessible at times.

According to the present invention, there is provided an actuator assembly for effecting rotational movement through a restricted spherical arc of a pivot member supported in a mounting permitting such rotational movement, centred at the mounting, of the longitudinal axis of the pivot member including a sphere longitudinally axially slidably mounted on the pivot member, first and second slide members arranged to be reciprocatably movable along guide means extending in mutually inclined directions parallel to a plane substantially perpendicular to the longitudinal axis of the pivot member when in a central position, each slide member being penetrated by a channel extending substantially perpendicular to the respective associated guide means, each channel having opposed surfaces co-acting with the sphere to locate the sphere intermediate the first and second slide members and first and second drive means operable to effect movement of the first and second slide means along the respective guide means.

The invention will now be described, by way of example, with reference to the accompanying, partly diagrammatic, drawings, in which:-

Figure 1 is a cross-sectional plan view of an actuating mechanism connected to a motor vehicle rear view mirror;

Figure 2 is a cross-sectional side elevation of the actuating mechanism and mirror, together with a portion of a mirror shell;

Figure 3 is a rear elevation of the actuating mechanism with a rear cover plate removed;

Figure 4 is an elevation of a gimbal ring for effecting pivotal mounting of the mirror;

Figure 5 is an elevation of a mounting post for the gimbal rig;

Figure 6 is a detail cross-sectional view of a slide showing a spring clip and taken on the line VI-VI of Figure 2;

Figure 7 is an elevation of the spring clip;

Figure 8 is a detail cross-sectional view taken on the line VIII - VIII of Figure 7; and

: 3 :

Figure 9 is a cross-sectional elevation taken on the line IX-IX of Figure 7.

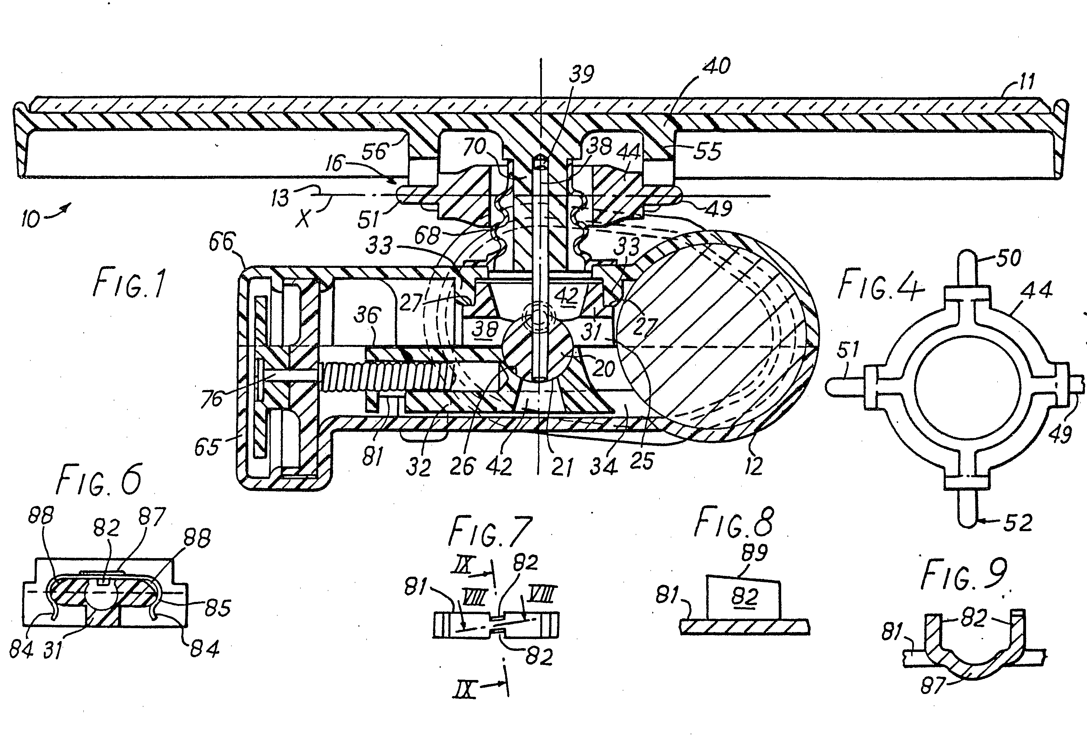

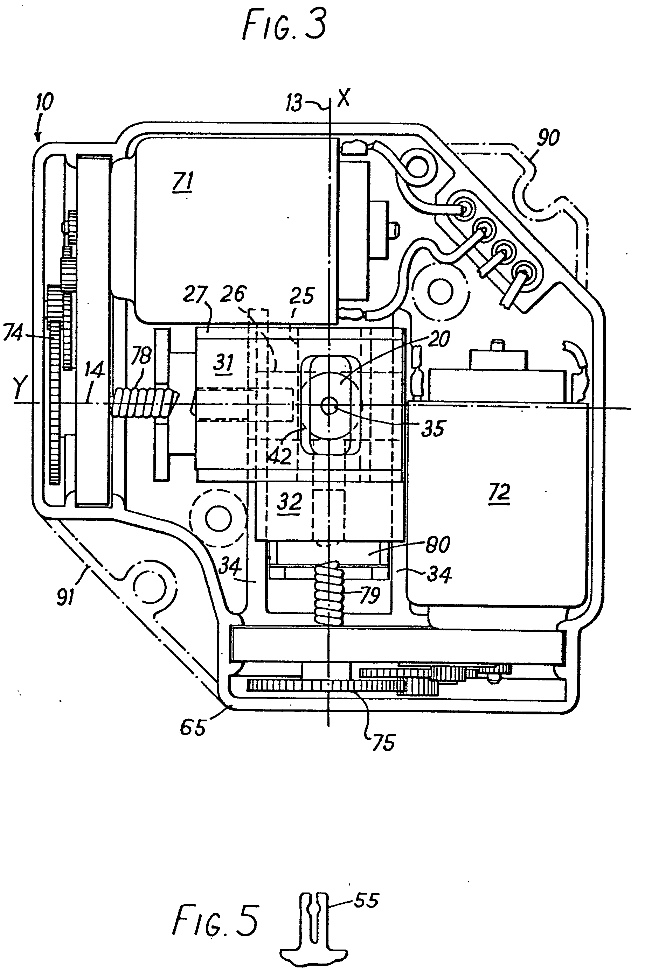

Referring to Figures 1 to 3 of the drawings, an electrically actuated rear view mirror assembly 10 includes a mirror 11 having a plastics backing plate 40 mounted on a plastics actuator housing 12, formed from two, resiliently mating, portions 65, 66, by means of a gimballed joint 16 permitting limited movement about a horizontal X-axis 13 and a vertical Y-axis 14. As shown in Figures 4 and 5 a plastics gimbal ring 44 is formed with diametrical pairs of orthogonally spaced stub shafts 49, 51 and 50, 52 dimensioned to form a snap fit respectively in a pair of bifurcated bearing posts 55, 56 moulded integrally of the mirror backing plate 40 and a pair of bifurcated bearing posts 58, 59 moulded integrally of the actuator housing 12.

A cylindrical boss 70 having a central bore 39 is also formed integrally of the mirror backing plate 40 and is provided with a flexible boot 68 extending between the boss and the actuator housing 12 to prevent ingress of foreign matter into the actuator housing.

A control rod 38 extending from the boss 70 to a lubricious plastics sphere 20 positioned within the actuator housing is a press fit within the central bore 39 of the boss and a sliding fit within a diametrical bore 21 in the sphere 20.

The sphere 20 is located in part cylindrical channels 25, 26 extending perpendicular the one to the other and respectively formed in a pair of lubricious plastics slides 31, 32.

Each channel 25, 26 is formed with an aperture 42 penetrating the respective slide to permit passage of the control rod 38. The slides 31, 32 are formed with stepped sides 27, 28 and are slidably positioned between pairs of guide rails 33, 34 formed to extend inwardly integrally of the actuator housing 12. The dimensions of the slides 31, 32 and the actuator housing 12 and pairs of guide rails are such that the slides are constrained to be reciprocatable parallel to the direction of the respective channels 25, 26 on the guide rails with opposed faces 35, 36 of the slides in sliding contact such that at all times the sphere 20 is positively located at the intersection of the two channels. In further embodiments, not shown, the slides are urged into contact either by spring means or by forming the slides with a bowed shape.

Reversible drive electrical motors 71, 72 are also positioned in the actuator housing 12 together with associated reduction gear transmissions 74, 75 and output shafts 76, 77 carrying closely wound helical springs 78, 79. The gear transmissions are such that whilst drive is transmissable from the respective motors to the output shafts, drive in the opposed direction, that is, from the output shaft to the motor, is prevented by the effect of friction.

The helical springs 78, 79 are respectively accommodated for free movement in a bore 37 in each of the slides 31, 32. A saddle surface 85 is formed on each of the slides 31, 32. adjacent the end portion thereof and has resiliently seated thereon a spring clip 81 having arcuate arms 84 resiliently retaining the clip on the saddle. The saddle is relieved at shoulders 88 to facilitate flexing of the spring clip. A central portion of the spring clip is slit and deformed to produce a pair of inwardly directed projections 82 inclined to the central axis of the spring clip to correspond to the helix angle of the helical springs 78, 79, and engage a turn thereof, together with an indentation 87 to produce a localised rigidity in the region of the projections. One of the projections 82 has an inclined edge 89 to facilitate location of the projections on the helical springs 78, 79.

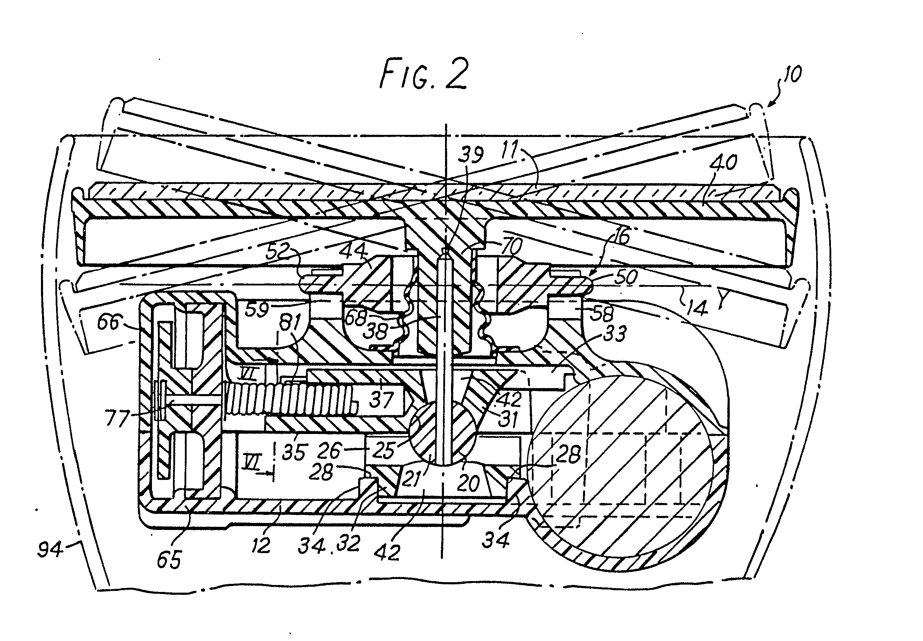

As shown in chain dotted outline in Figure 3, flanges 90, 91 are provided on the housing 12 for mounting the housing on lugs (not shown) in a mirror shell 94, a portion of which is shown in chain dotted outline in Figure 2.

In operation, with the assembly 10 mounted on a vehicle, the mirror may be rotated about the X add Y axes by appropriate energisation of the electric motors 71, 72 through electrical switch means (not shown)adjacent the driver's position in the vehicle. On energisation of the electrical motor 71 to rotate in one direction, the rotation is transmitted through the reduction gear transmission 74 to the output shaft 76 and helical spring 78. By virtue of the engagement of the projections 82 an the spring clip 81 seated on the saddle surface 85 of the slide 31 with the helical spring 78, rotation of the helical spring causes the slide 31 to move along the guide rails 33 thereby causing the sphere 20 to move in a direction parallel to the guide rails 33, and along the channel 26 in the slide 32. Such movement of the sphere 20 produces a corresponding movement of the control rod 38 to rotate the mirror 11 about the X axis through the stub shafts 49, 51 on the gimbal ring 48. Energisation of the motor 71 to rotate in the other direction will produce rotation of the mirror 11 in the other direction about the X-axis.

Similarly, energisation of the electric motor 72 to rotate in one direction or the other is transmitted through the reduction gear transmission 75 to produce a corresponding rotation of the helical spring 79 and movement of the slide 32 along the guide rails 34 with the sphere 20 moving along the channel 25 in the slide 31. The corresponding movement produced is the control rod 38 serves to rotate the mirror about the Y-axis through the stub shafts 50, 52 on the gimbal ring 48.

It will be appreciated that both motors 71, 72 may be energised simultaneously to obtain a composite rotational motion of the mirror 11.

Since both the spring clip 81 and each of the helical springs 77, 78 are resilient, upon a slide reaching a limit of travel, the spring clip 81 flexes to allow the projections 82 to ride over the turns of the associated helical spring, which may extend or compress to assist the movement. The force required to flex the spring clip 81 is less than the force at which the electric motor 71 or 72 stalls so that the associated helical spring continues to rotate and a clicking noise is produced by the movement of the projections 82 riding over the turns of the helical spring, thereby giving an audible warning that a limit of travel has been reached.

Should a failure occur either in the electrical supply or in the electric motors 71, 72, the mirror may be adjusted manually. Manual pressure on the mirror backing plate 40 is transmitted through the boss 70, the control rod 38 and the sphere 20 to either or both of the slides 31, 32. The or each associated spring clip 81 flexes to permit the projections 82 to ride over the turns on the associated stationary helical spring 77, 78 to permit movement of the slide, and hence positioning of the mirror.

The resilience of the spring clip 81 is selected to permit flexure both when the associated slide has reached a limit of travel and when it is desired to effect manual adjustment of the mirror whilst restraining movement or flutter due to vehicle vibration or air flow past the mirror.

It will be appreciated that the channels 25, 26 whilst illustrated and described as semi-circular in cross-section may have other cross-sectional forms such as triangular or trapezoidal, so long as positive engagement is achieved with the sphere 20. Further other forms of drive to the helical springs 78, 79 may be utilised.

It will also be appreciated that the assembly may be utilised angularly to position items other than rear-view mirrors such as television cameras or spot lights in less accessible locations.

5.     In some situations it may be advantageous angularly to position the pairs of guide rails 33, 34 at an angle other than perpendicular in order to accommodate restrictions in the shape of the housing or to align one of the pairs of guide rails with a most usually followed line of movement.

CLAIMS:

1. An actuator assembly for effecting rotational movement through a restricted spherical arc of a pivot member supported in a mounting permitting such rotational movement, centred at the mounting, of the longitudinal axis of the pivot member including a sphere longitudinally axially slidably mounted on the pivot member, first and second slide members arranged to be reciprocatably movable along guide means extending in mutually inclined directions parallel to a plane substantially perpendicular to the longitudinal axis of the pivot member when in a central position, each slide member being penetrated by a channel extending substantially perpendicular to the respective associated guide means, each channel having opposed surfaces co-acting with the sphere to locate the sphere intermediate the first and second slide members and first and second drive means operable to effect movement of the first and second slide means along the respective guide means.

2. An actuator assembly as claimed in Claim 1, wherein the pivot member includes a head portion connected to the mounting and a rod portion extending into a bore in the head portion and into a bore in the sphere, the sphere being longitudinally axially slidably movable relative to the head portion.

3. An actuator assembly as claimed in Claim 2, wherein the rod portion makes a sliding fit in the bore in the sphere.

4. An actuator assembly as claimed in any preceding claim, wherein the opposed surfaces of the channels in the first and second slide members co-acting with the sphere are of part cylindrical form of diameter corresponding to that of the sphere.

5.      An actuator assembly as claimed in any preceding claim, wherein the first and second slide members are resiliently urged into engagement with the sphere.

6.      An actuator assembly as claimed in any preceding claim wherein the first and second slide members and the sphere are formed of lubricious plastics materials.

7.      An actuator assembly as claimed in any preceding claim, wherein the mounting supporting the pivot member includes a gimbal ring.

8.      An actuator assembly as claimed in any preceding claim, wherein a flexible seal is provided between the pivot member and a housing enclosing the first and second slide members and the first and second drive means, the pivot member extending through an aperture in the housing.

9.      An actuator assembly as claimed in any preceding claim, wherein the guide means respectively associated with the first and second slide members extend in mutually perpendicular directions.

10.      An actuator assembly as claimed in any preceding claim, wherein the first and second drive means each include an override device having a resilient bias arranged to act to transmit drive and to permit, against the resilient bias, transient partial disengagement of the drive means from the respective first and second slide members thereby permitting independent movement between the drive means and the associated slide member.

11.      An actuator assembly as claimed in Claim 10, wherein each override device includes a follower mounted on the associated slide member and resiliently biassed into engagement with a rotatable helical track drive.

12. An actuator assembly as claimed in Claim 11, wherein the helical track drive is connected to be driven, through a reduction gear transmission, by an electric motor energisable to rotate in either direction.

13. An actuator assembly as claimed in Claim 11 or Claim 12, wherein the helical track drive includes a resilient wire helically wound, with close turns,on a drive shaft.

14. An actuator assembly as claimed in Claim 11, Claim 12 or Claim 13, wherein the follower comprises a leaf spring clip resiliently engageable with shoulders formed on the associated slide member and having a projection or a pair of projections bent out of a central portion of the leaf spring clip to engage the helical track drive.

15. An actuator assembly as claimed in Claim 14, wherein the central portion of the leaf spring clip is more rigid than portions of the leaf spring clip adjoining the central portion.

16. An actuator assembly as claimed in any preceding claim, wherein the actuator assembly includes means for mounting the actuator assembly on a motor vehicle and a rear view mirror is mounted on the pivot member.

17. An actuator assembly as claimed in Claim 16, wherein the means for mounting the actuator assembly on a motor vehicle includes a cylindrical shell partially surrounding the actuator assembly.

FIG.1

FIG.4

FIG.6

FIG.7

FIG.8

FIG.9

1/3

0045635

Fig. 2

FIG. 3

FIG. 5